# EUROPÄISCHE PATENTANMELDUNG

(11) **EP 0 762 089 A2**
(43) Veröffentlichungstag der Anmeldung: **12.03.1997**
(21) Anmeldenummer: 96113364.2
(22) Anmeldetag: 21.08.1996
(51) Int. Cl.: G01F 23/284

(54) **Füllstandsmessgerät**

(30) Priorität: 05.09.1995 DE 19532646
(71) Anmelder: KROHNE MESSTECHNIK GMBH & CO. KG, D-47058 Duisburg (DE)
(72) Erfinder: Van der Pol, Ronald, Dipl.-Ing., 5924 AK Venlo (NL)
(74) Vertreter: Patentanwälte Gesthuysen, von Rohr, Weidener, Schüll, Häckel

(57) **Zusammenfassung**

Die Erfindung betrifft ein Füllstandsmeßgerät, das nach dem Radarprinzip arbeitet, mit einer Steuer- und Auswerteschaltung (1), mit einer Radarfrequenzschaltung (2) und mit einem Radarwelleneinkoppelelement (3). Erfindungsgemäß ist ein solches Füllstandsmeßgerät dadurch gekennzeichnet, daß zumindest die Radarfrequenzschaltung (2) in einem gegenüber der Umgebung gasdicht abgeschlossenen Bereich (4) angeordnet ist.

## Beschreibung

Die Erfindung betrifft ein Füllstandsmeßgerät, das nach dem Radarprinzip arbeitet, mit einer Steuer- und Auswerteschaltung, mit einer Radarfrequenzschaltung und mit einem Radarwelleneinkoppelelement.

Nach dem Radarprinzip arbeitende Füllstandsmeßgeräte haben sich im industriellen Bereich in hohem Umfang durchgesetzt und verbreitet. In der Regel ermitteln solche Füllstandsmeßgeräte den Füllstand von in Behältern befindlichen Medien, im allgemeinen Flüssigkeiten. Bei den nach dem Radarprinzip arbeitenden Füllstandsmeßgeräten besteht allgemein eine Tendenz hin zu höheren Frequenzen der Radarwellen. Je höher die Frequenzen der Radarwellen sind, um so höher sind auch der Antennengewinn und somit auch die Genauigkeit der Füllstandsmeßgeräte. Außerdem ergibt sich bei höheren Frequenzen für die Radarwellen ein kleinerer Abstrahlwinkel und somit eine bessere Fokussierung auf das im Behälter befindliche Medium.

Der wünschenswerten Erhöhung der Frequenzen für die Radarwellen stehen jedoch verschiedene Probleme entgegen. Ein ganz wesentliches Problem ist hierbei die Gerade beim Einsatz der Füllstandsmeßgeräte im industriellen Bereich auftretende Bildung von Kondenzwasser auf verschiedenen Bauteilen der Füllstandsmeßgeräte, verursacht durch Temperaturschwankungen in der Umgebung der Füllstandsmeßgeräte. Diese Kondenzwasserbildung führt auf den Bauteilen der Radarfrequenzschaltung zu einer unter Umständen deutlichen Beeinflussung der schwingungstechnischen Eigenschaften. Als Gegenmaßnahme hierzu ist im Stand der Technik die Verwendung von Feuchtigkeitsschutzlacken auf der Radarfrequenzschaltung vorgeschlagen worden. Bei sehr hohen Radarfrequenzen führt jedoch bereits die Aufnahme des Kondenzwassers auf den Feuchtigkeitsschutzlack zu einer Beeinflussung der schwingungstechnischen Eigenschaften der Radarfrequenzschaltung. Der Feuchtigkeitsschutzlack bildet in diesen Fällen eine dielektrische Schicht, deren Dielektrizitätskonstante sich durch Aufnahme des Kondenzwassers in einem die Eigenschaften beeinflussenden Umfang ändert. Auch die die Radarwellen in einen Hohlleiter bzw. eine Antenne einkoppelnden Radarwelleneinkoppelelemente erweisen sich mit zunehmender Frequenz als kondenzwasserempfindlich. Da die Abmessungen der Radarwelleneinkoppelelemente mit der Wellenlänge der Radarwellen korrelieren, nimmt der Einfluß sich niederschlagender Kondenzwasserschichten mit reduzierten Abmessungen der Radarwelleneinkoppelelemente zu. Im Ergebnis nimmt also das "mismaging" eines nach dem Radarprinzip arbeitenden Füllstandsmeßgerätes, verursacht durch Kondenzwasserschichten, mit zunehmender Frequenz der Radarwellen ebenfalls zu.

Der Erfindung liegt somit die Aufgabe zugrunde, die bekannten Füllstandsmeßgeräte, die nach dem Radarprinzip arbeiten, derart auszugestalten und weiterzubilden, daß eine Erhöhung der Radarfrequenzen möglich ist, ohne daß dabei durch eine Kondenzwasserbildung Probleme auftreten.

Erfindungsgemäß ist die zuvor aufgezeigte Aufgabe dadurch gelöst, daß zumindest die Radarfrequenzschaltung in einem gegenüber der Umgebung gasdicht abgeschlossenen Bereich angeordnet ist. Durch die erfindungsgemäße Maßnahme ist gewährleistet, daß auch bei Temperaturschwankungen in der Umgebung des Füllstandsmeßgerätes keine Kondenzwasserbildung an der Radarfrequenzschaltung stattfindet. Somit bleiben auch die elektrischen Eigenschaften der Radarfrequenzschaltung unbeeinflußt.

Sind in dem gasdicht abgeschlossenen Bereich noch feuchteabsorbierende Materialien angeordnet - natürlich nicht auf der Radarfrequenzschaltung, so ist auch bei sehr langer Betriebsdauer der erfindungsgemäßen Füllstandsmeßgeräte sichergestellt, daß eventuell in den gasdicht abgeschlossenen Raum über längere Zeit eindringende geringe Mengen von Feuchtigkeit ohne Beeinflussung der Radarfrequenzschaltung gebunden werden.

Um eine Kondenzwasserbildung auf dem Radarwelleneinkoppelelement zu verhindern, ist es zunächst möglich, das Radarwelleneinkoppelelement derart auszubilden, daß es beheizbar ist.

Alternativ zu der zuletzt aufgeführten Maßnahme ist es möglich, das erfindungsgemäße Füllstandsmeßgerät dadurch weiterzubilden, daß das Radarwelleneinkoppelelement ebenfalls in einem gegenüber der Umgebung gasdicht abgeschlossenen Bereich angeordnet ist. Hierdurch ist ebenso wie für die Radarfrequenzschaltung gewährleistet, daß sich auf dem Radarwelleneinkoppelelement kein Kondenzwasser niederschlägt.

Sind nun die Radarfrequenzschaltung und das Radarwelleneinkoppelelement gemeinsam in einem gegenüber der Umgebung gasdicht abgeschlossenen Bereich angeordnet, so ist es von Vorteil, das Substrat der Radarfrequenzschaltung und des Radarwelleneinkoppelelementes einstückig auszuführen. Durch diese Maßnahme erreicht man, daß zwischen der Radarfrequenzschaltung und dem Radarwelleneinkoppelelement nicht, wie bisher, in vielerlei Hinsicht problematische Hochfrequenzkoaxkabel eingesetzt werden müssen.

Der gasdicht gegenüber der Umgebung abgeschlossene Bereich für das Radarwelleneinkoppelelement kann dadurch realisiert sein, daß dem Radarwelleneinkoppelelement ein gasdichtes, radarwellendurchlässiges, dielektrisches Trennelement zugeordnet ist. Ist das Trennelement unmittelbar oder über einen Hohlleitertransformator mit dem Radarwelleneinkoppelelement verbunden, so ist selbst der Einfluß etwa im abgeschlossenen Bereich verbleibender Feuchtigkeit stark reduziert. Vorzugsweise ist das Trennelement im Hinblick auf eine reduzierte Impedanz an eine die Radarwellen aussendende Antenne angepaßt.

Für den Fall, daß die Radarwellen entlang eines durchgehenden Hohlleiters zur Oberfläche des zu detektierenden Mediums in einen Behälter gelangen, ist es von Vorteil, das erfindungsgemäße Füllstandsmeßgerät dadurch auszugestalten, daß ein die Radarwellen aufnehmender Hohlleiter ein zwei Hohlleiterbereiche trennendes Trennelement aufweist. In diesem Fall wird so der das Radarwelleneinkoppelelement gasdicht abschließende Bereich geschaffen.

Bei beiden zuletzt geschilderten Ausgestaltungen des erfindungsgemäßen Füllstandsmeßgerätes ist es vorteilhaft, wenn das Trennelement entlang seinem Umfang mit einer elektrisch leitenden Schicht versehen ist. Hierdurch bildet das Trennelement in diesem Abschnitt selbst den Hohlleiter.

Eine besonders gute Abstrahlcharakteristik des Trennelementes für die Radarwellen ist beispielsweise dadurch zu erreichen, daß das Trennelement an seiner von dem Radarwelleneinkoppelelement abgewandten Seite hornartig ausgebildet ist. Diese hornartige Ausbildung des Trennelementes erfährt eine besonders geeignete Weiterbildung dadurch, daß das Trennelement außerhalb seiner die Radarwellen abstrahlenden Stirnseite mit einer elektrisch leitenden Schicht oder einer bündig abschließenden Hülse versehen ist. Durch diese Maßnahme ist gewährleistet, daß auch hier der Einfluß von Kondenzwasser auf die Abstrahleigenschaften des Trennelementes möglichst stark reduziert ist.

Eine Alternative zu der hornartigen Ausbildung des Trennelementes an der dem Radarwelleneinkoppelelement abgewandten Seite ist die Ausbildung als Stabstrahler.

Schließlich kann dadurch, daß die mit der Umgebung in Kontakt tretenden Oberflächen des Radarwelleneinkoppelelementes oder des Trennelementes korrisionsbeständig ausgebildet werden, gewährleistet werden, daß das erfindungsgemäße Füllstandsmeßgerät auch in Behältern mit aggressiver Atmosphäre einsetzbar ist.

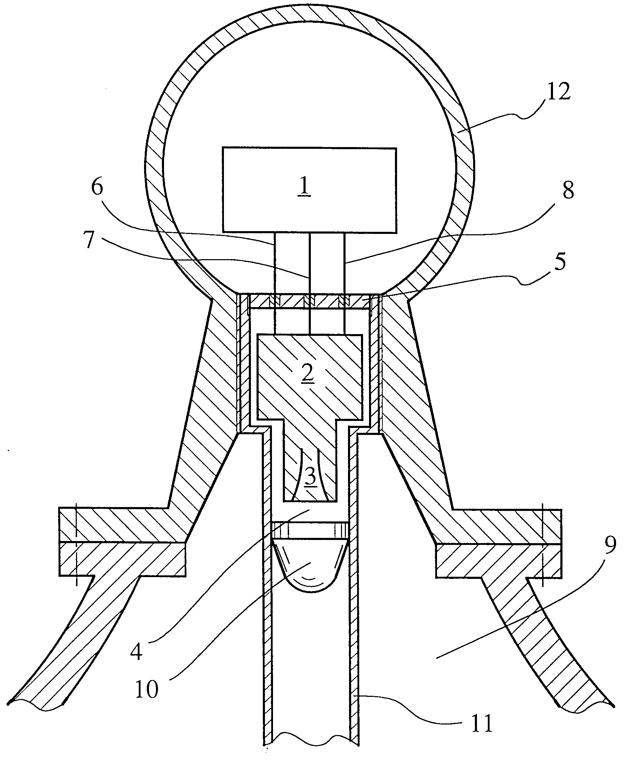

Im einzelnen gibt es nun eine Vielzahl von Möglichkeiten, das erfindungsgemäße Füllstandsmeßgerät, das nach dem Radarprinzip arbeitet auszugestalten und weiterzubilden. Dazu wird verwiesen einerseits auf die dem Patentanspruch 1 nachgeordneten Patentansprüche, andererseits auf die Beschreibung eines bevorzugten Ausführungsbeispiels in Verbindung mit der Zeichnung. In der Zeichnung zeigt die einzige Figur ein Ausführungsbeispiel eines erfindungsgemäßen Füllstandsmeßgerätes schematisch und im Schnitt dargestellt.

Das in der Zeichnung dargestellte Ausführungsbeispiel eines Füllstandsmeßgerätes, das nach dem Radarprinzip arbeitet, weist auf eine nur Andeutungsweise dargestellte Steuer- und Auswerteschaltung 1, eine zur Erzeugung von Radarfrequenzen im Bereich von einigen GHz geeignete Radarfrequenzschaltung 2 und ein Radarwelleneinkoppelelement 3.

Bei dem in der einzigen Figur dargestellten Ausführungsbeispiel eines erfindungsgemäßen Füllstandsmeßgerätes ist sowohl die Radarfrequenzschaltung 2 als auch das Radarwelleneinkoppelelement 3 in einem gegenüber der Umwelt gasdicht abgeschlossenen Bereich 4 angeordnet.

In Richtung auf die Steuer- und Auswerteschaltung 1 erfolgt die Abdichtung des Bereiches 4 im wesentlichen durch eine gasdichte Leitungsdurchführung 5, über die Versorgungsleitungen 6, 7 sowie eine Signalleitung 8 der Radarfrequenzschaltung 2 mit der Steuer- und Auswerteschaltung 1 verbunden ist.

Im dargestellten Ausführungsbeispiel des Füllstandsmeßgerätes ist das Substrat der Radarfrequenzschaltung 2 und des Radarwelleneinkoppelelementes 3 einstückig ausgeführt.

Die Abdichtung zwischen dem gasdicht abgeschlossenen Bereich 4 in Richtung auf das zu detektierende, in einem nur andeutungsweise dargestellten Behälter 9 befindliche nicht dargestellte Medium erfolgt über ein gasdichtes, radarwellendurchlässiges, dielektrisches Trennelement 10.

Da in dem in der einzigen Figur dargestellten Ausführungsbeispiel eines erfindungsgemäßen Füllstandsmeßgerätes ein Hohlleiter 11 sich in Richtung auf das nicht dargestellte Medium erstreckt, trennt das Trennelement 10 zwei Hohlleiterbereiche des Hohlleiters 11 gasdicht voneinander. Das Trennelement 10 ist im vorliegenden Ausführungsbeispiel an seiner dem Radarwelleneinkoppelelement 3 abgewandten Seite hornartig ausgebildet.

Im industriellen Bereich werden die gattungsgemäßen Füllstandsmeßgeräte auch regelmäßig in explosionsgefährdeten Bereichen eingesetzt. Das erfindungsgemäße Füllstandsmeßgerät läßt sich an den Einsatz in solchen explosionsgefährdeten Bereichen besonders einfach dadurch anpassen, daß der gasdicht abgeschlossene Bereich 4 auch druckdicht abgeschlossen ist. Ist weiter die Steuer- und Auswerteschaltung 1, die Radarfrequenzschaltung 2 und das Radarwelleneinkoppelelement 3 in einem an sich bekannten explosionsgeschützten, hier nur angedeuteten Gehäuse 12 angeordnet, so ergibt sich ein insgesamt explosionsgeschütztes Füllstandsmeßgerät.

Für den nicht dargestellten Fall, daß sich nur die Radarfrequenzschaltung in einem gasdicht abgeschlossenen Bereich befindet, ist es für den Einsatz in explosionsgefährdeten Bereichen notwendig, daß bei Verwendung von Radarwelleneinkoppelelementen aus Dielektrika hoher Oberflächenwiderstände die Radarfrequenzen so hoch gewählt werden, daß die Oberflächen des Radarwelleneinkoppelelementes so klein wählbar sind, daß die in dem explosionsgefährdeten Bereich maximal zulässigen Oberflächengrößen nicht überschritten werden.

## Patentansprüche

1. Füllstandsmeßgerät, das nach dem Radarprinzip arbeitet, mit einer Steuer- und Auswerteschaltung (1), mit einer Radarfrequenzschaltung (2) und mit einem Radarwelleneinkoppelelement (3), **dadurch gekennzeichnet**, daß zumindest die Radarfrequenzschaltung (2) in einem gegenüber der Umgebung gasdicht abgeschlossenen Bereich (4) angeordnet ist.

2. Füllstandsmeßgerät nach Anspruch 1, dadurch gekennzeichnet, daß in dem gasdicht abgeschlossenen Bereich (4) feuchteabsorbierende Materialien angeordnet sind.

3. Füllstandsmeßgerät nach Anspruch 1 oder 2, dadurch gekennzeichnet, daß das Radarwelleneinkoppelelement (3) beheizbar ist.

4. Füllstandsmeßgerät nach Anspruch 1 oder 2, dadurch gekennzeichnet, daß das Radarwelleneinkoppelelement (3) in einem gegenüber der Umgebung gasdicht abgeschlossenen Bereich (4) angeordnet ist.

5. Füllstandsmeßgerät nach Anspruch 4, dadurch gekennzeichnet, daß die Radarfrequenzschaltung (2) und das Radarwelleneinkoppelelement (3) auf einem einstückig ausgeführten Substrat realisiert sind.

6. Füllstandsmeßgerät nach Anspruch 4 oder 5, dadurch gekennzeichnet, daß dem Radarwelleneinkoppelelement (3) ein gasdichtes, radarwellendurchlässiges, dielektrisches Trennelement (10) zugeordnet ist.

7. Füllstandsmeßgerät nach Anspruch 6, dadurch gekennzeichnet, daß das Trennelement (10) unmittelbar oder über einen Hohlleitertransformator mit dem Radarwelleneinkoppelelement (3) verbunden ist.

8. Füllstandsmeßgerät nach Anspruch 6 oder 7, dadurch gekennzeichnet, daß das Trennelement (10) im Hinblick auf eine reduzierte Impedanz an eine die Radarwellen aussendende Antenne angepaßt ist.

9. Füllstandsmeßgerät nach Anspruch 6 oder 7, dadurch gekennzeichnet, daß ein die Radarwellen aufnehmender Hohlleiter (11) ein zwei Hohlleiterbereiche trennendes Trennelement (10) aufweist.

10. Füllstandsmeßgerät nach Anspruch 8 oder 9, dadurch gekennzeichnet, daß das Trennelement (10) entlang seinem Umfang mit einer elektrisch leitenden Schicht versehen ist.

11. Füllstandsmeßgerät nach einem der Ansprüche 8 bis 10, dadurch gekennzeichnet, daß das Trennelement (10) an seiner von dem Radarwelleneinkoppelelement (3) abgewandten Seite hornartig ausgebildet ist.

12. Füllstandsmeßgerät nach Anspruch 11, dadurch gekennzeichnet, daß das Trennelement (10) außerhalb seiner die Radarwellen abstrahlenden Stirnseite mit einer elektrisch leitenden Schicht oder einer bündig abschließenden Hülse versehen ist.

13. Füllstandsmeßgerät nach einem der Ansprüche 8 bis 10, dadurch gekennzeichnet, daß das Trennelement (10) an seiner von dem Radarwelleneinkoppelelement (3) abgewandten Seite als Stabstrahler ausgebildet ist.

14. Füllstandsmeßgerät nach einem der Ansprüche 1 bis 13, dadurch gekennzeichnet, daß die mit der Umgebung in Kontakt tretenden Oberflächen des Radarwelleneinkoppelelementes (3) oder des Trennelementes (10) korrosionsbeständig ausgebildet sind.
